# EUROPEAN PATENT SPECIFICATION

(11) **EP 2 942 647 B1**
(45) Date of publication and mention of the grant of the patent: **10.04.2019**
(21) Application number: 14001582.7
(22) Date of filing: 06.05.2014
(51) Int. Cl.: G01T 7/00

(54) **Calibration Element for a Flat Panel X-ray Detector**
Kalibrierungselement für einen flachen Röntgenstrahlendetektor
Élément d'étalonnage pour détecteur de rayons X à écran plat

(43) Date of publication of application: 11.11.2015
(73) Proprietor: Dornier MedTech Systems GmbH, 82234 Wessling (DE)
(72) Inventor: Eizenhöfer, Harald, 82229 Seefeld (DE)
(74) Representative: Grünecker Patent- und Rechtsanwälte PartG mbB

(56) References cited:
- EP-A1- 2 703 843
- WO-A1-2006/126281
- WO-A1-2009/155658
- KR-B1- 101 304 202
- US-A1- 2009 084 474
- US-A1- 2011 091 017
- RANGER NICOLE ET AL: "Measurement of the detective quantum efficiency in digital detectors consistent with the IEC 62220-1 standard: Practical considerations regarding the choice of filter material", MEDICAL PHYSICS, AIP, MELVILLE, NY, US, vol. 32, no. 7, 21 June 2005 (2005-06-21), pages 2305-2311, XP012075400, ISSN: 0094-2405, DOI: 10.1118/1.1929187
- MORISHIGE T ET AL: "Comprehensive analysis of minimum grain size in pure aluminum using friction stir processing", MATERIALS LETTERS, ELSEVIER, AMSTERDAM, NL, vol. 64, no. 17, 15 September 2010 (2010-09-15), pages 1905-1908, XP027137301, ISSN: 0167-577X [retrieved on 2010-06-09]
- HONGJUN JI ET AL: "Microstructure evolution of 1100 Al alloy multi-foils during ultrasonic additive manufacturing", 2012 13TH INTERNATIONAL CONFERENCE ON ELECTRONIC PACKAGING TECHNOLOGY & HIGH DENSITY PACKAGING (ICEPT-HDP); 13-16 AUGUST 2012; GUILIN, CHINA, IEEE, PISCATAWAY, NJ, USA, 13 August 2012 (2012-08-13), pages 1586-1589, XP032339057, DOI: 10.1109/ICEPT-HDP.2012.6474910 ISBN: 978-1-4673-1682-8
- SATO Y S ET AL: "Friction stir welding of ultrafine grained Al alloy 1100 produced by accumulative roll-bonding", SCRIPTA MATERIA, ELSEVIER, AMSTERDAM, NL, vol. 50, no. 1, 1 January 2004 (2004-01-01), pages 57-60, XP004463796, ISSN: 1359-6462, DOI: 10.1016/J.SCRIPTAMAT.2003.09.037

## Description

The invention concerns a flat panel x-ray detector calibration element according to claim 1. The present invention further concerns a method of calibrating a flat panel x-ray detector according to the features of claim 11 and the use of a calibration element according to claim 12.

WO 2006/126281 A1 discloses an aluminum alloy sheet suitable for automobile components manufactured by bending or pressing and also relates to a method of manufacturing such a sheet. The sheet has a grain size of 10 to 25 µm to obtain an improved surface quality.

US 2011/091017 A1 discloses a method and system for measuring the operating voltage used by an x-ray imaging system to be able to assess the dose of generated x-rays to confirm that the actual dose of x-rays generated corresponds to the dose that is prescribed or specified. The method is based on differing x-ray attenuation data obtained by x-ray attenuation through differing x-ray attenuating media.

Moreover, from Ranger Nicole et al.: "Measurement of the detective quantum efficiency in digital detectors consistent with the IEC 62220-1 standard: Practical considerations regarding the choice of filter material", Medical Physics, AIP, Melville, NY, US, vol. 32, no. 7, 21. June 2005, p. 2305-2311, it is known that it may be beneficial to use an aluminum member having at least an average grain size less than 50 microns for calibration.

Hongjun Ji et al.: "Microstructure evolution of 1100 Al alloy multi-foils during ultrasonic additive manufacturing"; 2012 13th international conference on electronic packaging technology and high density packaging, 13-16 August 2012, Guilin, China, IEEE, Piscataway, NJ, USA, 13 August 2012, p. 1586-1589, discloses a multi-layer aluminum foil, which is generated during ultrasonic additive manufacturing.

The calibration element according to the present invention is used for the calibration of flat panel x-ray detectors (FPDs).

A regular calibration of a FPD is necessary as each pixel of an FPD has a different amplification factor (gain) which results from tolerances in the pixel manufacturing process. Also, the amplification factors of the pixels change due to aging processes.

During the calibration of an FPD, an aluminum x-ray attenuation member is used to homogeneously attenuate an x-ray beam directed to the FPD. The attenuated x-ray beam is detected by the pixels of the FPD and each pixel transfers the received x-ray intensity into a corresponding output signal. Existing differences between the output signals are processed and leveled so that the final image received in a display device shows at all positions of the FPD the same grey value for the same amount of attenuated x-ray exposure.

Further, during the calibration of the FPD, defect pixels are detected and compensated by the average output value of adjacent pixels. Also, due to the cone shape of the x-ray beam which is directed on the FPD, the x-ray intensity in the outer edge regions of the cone-shaped beam is smaller than in the region of the centre axis of the beam. This unwanted effect is compensated through the calibration of the FPD such that pixels at the outer edge region of the cone-shaped beam get assigned to a higher amplification factor than the pixels in the region of the centre axis of the beam.

Through the regular calibration of the FPD, it is ensured that despite the above described differences in the amplification factors, possibly defect pixels and known differences in the attenuated x-ray intensity due to the geometry of the x-ray beam, all the pixels and thus all the regions of the FPD render the same grey value for a given x-ray exposure. This ensures comparable and high quality x-ray diagnoses.

The aforementioned calibration process is directed to the calibration of the FPD itself and thus must be distinguished from known measurements according to the IEC 62220-1 standard in which the radiation level of an x-ray tube and the spectral quality of the x-ray beam emitted by the x-ray tube are measured with the help of so called RQA-filters.

From the prior art, the use of a calibration element for the calibration of an FPD is known in the form of a single block aluminum member which is positioned between an x-ray tube and the FPD in order to create an attenuated x-ray beam for the calibration procedure.

However, with the increasing resolution provided by the FPDs of the latest generation, the known calibration elements have revealed deficiencies in the required homogeneity of attenuation. Due to the high resolution of the latest FPDs, the attenuated x-ray intensity detected by the pixels during the use of known calibration elements showed locally excessive values of the attenuated x-ray intensity as well as locally too low values of the attenuated x-ray intensity which reduced the quality of the calibration procedure and thus the performance of the FPDs.

It is an object of the present invention to provide a flat panel x-ray detector calibration element that can provide a more homogeneous x-ray attenuation compared with the known calibration elements and that can still be economically manufactured and handled.

The present invention suggests achieving this object by a flat panel x-ray detector calibration element having the features of claim 1.

It has been found out that an aluminum member having an average grain size smaller than 50 µm provides a more homogenously distributed x-ray intensity in the attenuated x-ray beam than known calibration elements. The homogeneous distribution in the attenuated x-ray beam ensures that less unexpected differences in the x-ray intensity occur within the attenuated x-ray beam. This improves the quality of the calibration of the flat panel x-ray detector, which is based on each detector pixel receiving the same attenuated x-ray intensity or an intensity that can be predicted based on the geometry of the cone shape of the beam

In preferred embodiments of the invention, the average grain size of the aluminum member is between 5 µm and 40 µm, particularly between 10 µm and 30 µm. Average grain sizes in the range of 5 µm to 40 µm have shown an improved x-ray intensity distribution in the attenuated x-ray beam and an average grain size in the range of 10 µm to 30 µm has shown even better results.

The aluminum member comprises several sheets in a stack-like arrangement. A stack-like arrangement of several sheets leads to an improved attenuated x-ray beam compared with the results from a single block aluminum member as known from the prior art. Furthermore, the attenuation properties of the calibration element are determined by multiple pieces and thus can be changed and adapted until the desired attenuation properties are achieved whereby an integrally formed aluminum block does not allow such flexibility during the manufacture. The use of cost-effective sheets also provides cost advantages compared with a single aluminum block having the same size as the stack-like arrangement.

Each sheet in the stack-like arrangement has a grain texture with the grains of this texture being oriented in a texture direction, and the texture directions of at least two sheets in the stack-like arrangement are transverse to one another. Arranging at least two sheets with their texture directions transverse to one another further homogenizes the x-ray intensity distribution within the attenuated x-ray beam.

The texture directions are perpendicular to one another which has shown superior results concerning a homogenous attenuated x-ray intensity distribution compared with other possible texture direction arrangements.

The sheets in the stack-like arrangement are stacked one on top of the other in a stacking direction and at least two sheets have the same dimensions when regarded along the stacking direction.

It is thus possible, for example during the manufacture of the calibration element and/or the later calibration procedure, that the texture directions of the at least two sheets can be repositioned to one another in order to optimize the homogeneity of attenuation of the stack-like arrangement without changing the overall dimensions of the stack-like arrangement when regarded along the stacking direction.

Preferably, all sheets have the same dimensions in the three-dimensional space. In addition to the advantages outlined in the previous paragraph, this allows that a sheet of uniform size is suitable for the replacement of each sheet in the stack-like arrangement. Also, all the sheets can be cost-effectively manufactured from a larger single sheet of unitary thickness.

In a further embodiment, it is suggested that the calibration element comprises a support structure, and the support structure comprises a frame and a grasping element attached to the frame and laterally grasping the sheets, in particular the grasping element clamps the sheets together between the frame and the grasping element. The lateral grasping of the sheets laterally supports and fixes the sheets. It ensures a fixed position of each sheet in the stack-like arrangement while keeping the shape of each sheet intact compared to known arrangements in which the sheets are bolted together. Furthermore, the lateral grasping of the sheets maximizes the area of the stack-like arrangement that can be positioned in the x-ray beam without providing unwanted further materials, such as bolts or an adhesive, in the path of the x-ray beam. The clamping of the sheets between the frame and the grasping element ensures that the sheets nestle against each other and the frame. This secures the sheets to one another while the sheets themselves do not need to be modified.

In a further embodiment, it is suggested that the grasping element is releasably attached to the frame, which allows an easy replacement or repositioning of each sheet during the manufacturing process as well as in the later calibration procedure.

In a further embodiment, the aluminum member has a degree of purity of aluminum of more than 95% per mass, particularly of more than 98% per mass, and more particularly of more than 99.9% per mass. The use of an aluminum member having a degree of purity of aluminum of more than 95% per mass has shown a homogenous distribution of the attenuated x-ray beam intensity. The use of an aluminum member having a degree of purity of aluminum of more than 98% per mass has shown better results and the use of a degree of purity of aluminum of more than 99.9% per mass has shown even better results. Further, a calibration element having an aluminum member with a degree of purity of more than 99.9% per mass could also be used as a RQA-filter.

In further embodiments, the aluminum member has a degree of purity of aluminum from 95% per mass to 99.9% per mass, particularly from 98% per mass to 99.9% per mass, more particularly from 98.1% per mass to 99.9% per mass and most particularly 98.1% per mass to 99.25% per mass. It has been discovered that an aluminum member having a degree of purity of aluminum according to the aforementioned narrowing ranges constitutes an optimized compromise between manufacturing costs and homogeneously attenuated x-ray intensity which improves with the ranges in the aforementioned order. Further embodiments relate to the aforementioned ranges but with the value 99.9% per mass being excluded.

According to further embodiments, the aluminum member has a degree of purity of aluminum from 95% per mass to 99.25% per mass, particularly from 95% per mass to 98% per mass. An aluminum member having a degree of purity of aluminum according to the aforementioned narrowing ranges also showed a homogeneously distributed x-ray intensity in the attenuated x-ray beam while keeping the costs for the manufacture as low as possible.

The present invention further suggests a method of calibrating a flat panel x-ray detector according to claim 11. This method improves the results of a calibration procedure of a flat panel x-ray detector as an aluminum member according to one of claims 1 to 10 is used in order to provide the attenuated x-ray beam. This results in a more homogeneously distributed x-ray intensity within the attenuated x-ray beam compared with calibration methods using known calibration elements. The quality of the calibration procedure therefore improves.

The present invention further suggests a use of a calibration element according to claim 12. The use of the calibration element according to one of claims 1 to 10 for the calibration of the signal output of pixels of a flat panel x-ray detector improves the results of the calibration procedure as the attenuated x-ray beam required for the calibration procedure has a more homogeneously distributed x-ray intensity within the attenuated x-ray beam compared with the use of known calibration elements.

In order to facilitate the understanding of the embodiments described before, exemplary embodiments of the invention will now be described with the help of the following figures.

In the figures,
- Figure 1: shows a schematic side view of an arrangement in which a calibration element according to an embodiment of the invention is provided in the path of an x-ray beam between an x-ray tube and an FPD,
- Figure 2: shows a perspective top view of the calibration element shown in Figure 1,
- Figure 3: shows a cross-sectional view taken along line A - A of Figure 2,
- Figure 4: shows a side view of the calibration element of Figure 2,
- Figure 5: shows a top view of the calibration element of Figure 2,
- Figure 6: shows a bottom view of the calibration element of Figure 2,
- Figure 7: shows a grain texture of an aluminum sheet of the calibration element of Figure 2.

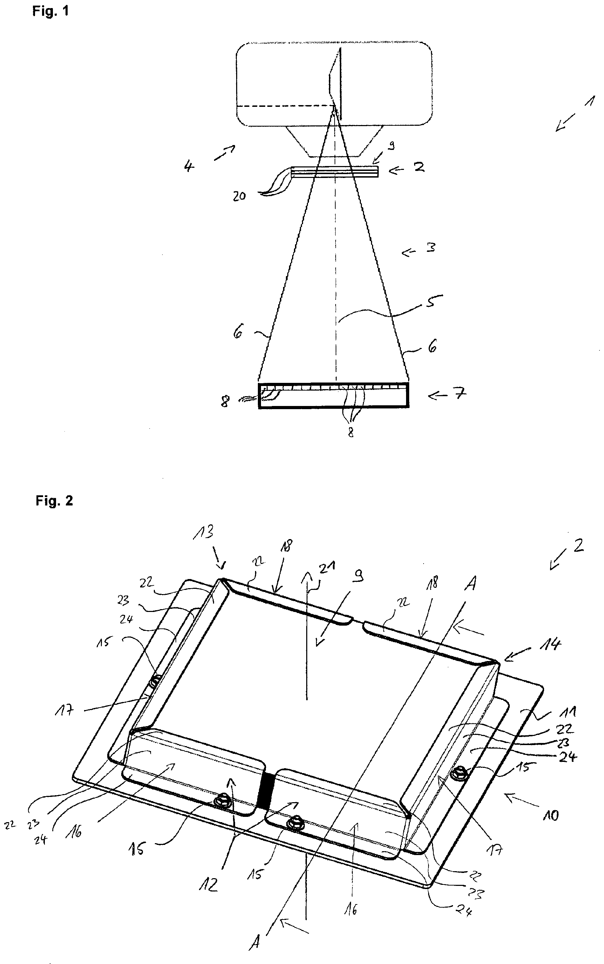

Figure 1 discloses parts of a schematic calibration arrangement 1 in which a flat panel x-ray detector calibration element 2, in the following named as "calibration element", is positioned in the path of a cone-shaped x-ray beam 3 emitted by an x-ray tube 4. Figure 1 further shows a center axis 5 of the x-ray beam, which is provided coaxially in the center of illustrated cone-shaped outer edge regions 6 of the beam 3.

The x-ray beam 3 is directed to a flat panel x-ray detector 7, in the following named as FPD. The outer surface of the FPD 7 which faces the calibration element 2 and the x-ray tube 4 is covered with pixels 8. For the sake of clarity, not all the pixels illustrated in Figure 1 are provided with reference signs 8.

The calibration element 2 is positioned in a distance to the FPD 7 in which all the pixels 8 of the FPD 7 can detect the x-ray beam 3 attenuated by the calibration element 2. With the term "attenuated x-ray beam" used in this application, it is meant the beam 3 after it has passed through the calibration element 2 and thus has been attenuated by the calibration element 2.

In an embodiment, the calibration element 2 is preferably only used for the calibration of FPDs.

Figure 2 shows in a perspective view of the calibration element 2 a side of the calibration element 2 that faces away from the x-ray tube 4. However, in a further embodiment, this side faces the x-ray tube 4.

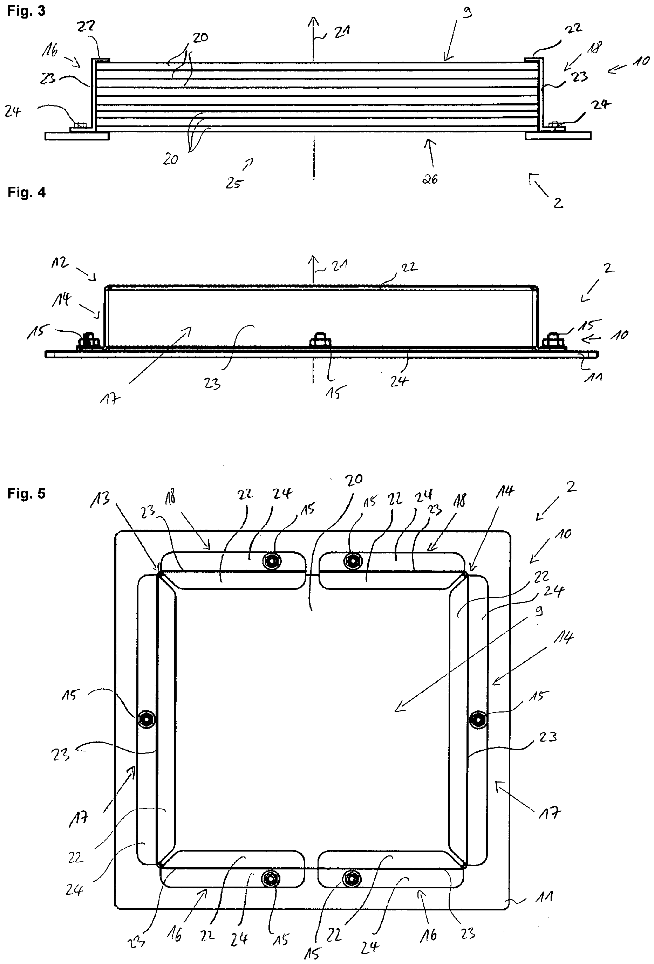

The calibration element 2 comprises an aluminum member 9 in a cubic, rectangular shape. The aluminum member is provided in the form of a stack-like arrangement 26 in which aluminum sheets 20 are stacked one on top of the other in a stacking direction 21. This will be further explained later with reference to Figure 3.

The calibration element 2 further comprises a support structure 10 that comprises a frame 11 and a grasping element 12.

The grasping element 12 has two holding clamps 13, 14 releasably attached to the frame 11, preferably with bolts 15.

Each holding clamp 13, 14 is formed from a sheet bent into a C-shape made of three straight lines when regarded along the stacking direction 21, which can best be seen in Figure 5.

The C-shape of the holding clamp 13, 14 is formed by three straight clamping portions 16, 17, 18, each bent perpendicular to the adjacent clamping portion. With the C-shape form, the holding clamp 13, 14 encompasses three lateral sides of the cubic-shaped aluminum member 9. Each straight clamping portion 16, 17, 18 provides an S-shaped profile in a cross-sectional view taken along the stacking direction 21, which can best be seen in Figure 3. The S-shaped profile is made of three consecutive straight sheet walls 22, 23, 24. Each straight sheet wall 22, 23, 24 is bent perpendicular to its adjacent wall. The two outer sheet walls 22, 24 are bent to opposite sides with respect to the middle sheet wall 23.

One outer sheet wall 24 of each clamping portion 16, 17, 18 is bolted to the frame 11. The other outer sheet wall 22 grasps the aluminum member 9 on the side facing away from the x-ray tube 4 and clamps the aluminum member 9 against the frame 11. The outer wall 22 of each clamping portion 16, 17, 18 extends substantially in parallel to the plane outer surface of the cubic shaped aluminum member 9 which faces away from the x-ray tube 4.

The two holding clamps 13, 14 are positioned on opposite sides of the aluminum member 9 and thus grasp the aluminum member 9 on all four lateral sides as well as on the side facing away from the frame 11.

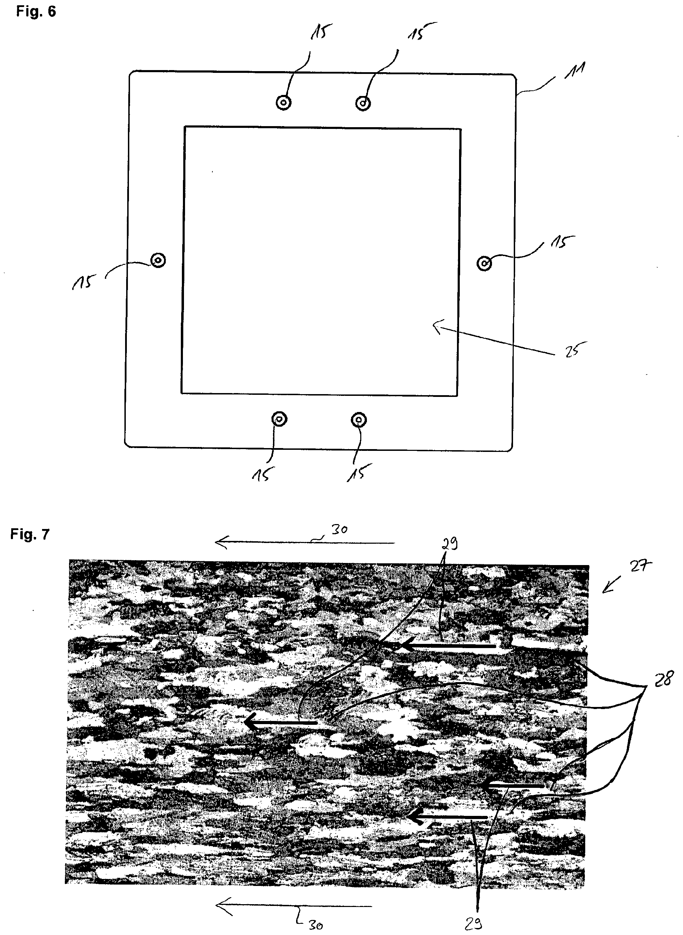

The frame 11 is a generally flat object extending in a sheet-like manner in a frame plane and is provided with a central frame hole 25, as known from a picture frame. The dimensions of the frame hole 25 along the frame plane are smaller than the dimensions of the aluminum member 9 when regarded in the stacking direction 21, as can best be seen in Figures 3 and 6. Thus, the aluminum member 9 can be clamped against the frame 11 and the x-ray beam 3 can partially pass through the aluminum member 9 with passing through the frame 11.

As shown in Figure 3, the aluminum member 9 comprises several aluminum sheets 20 in a stack-like arrangement or stack 26. For the sake of clarity, only some of the sheets have been provided with a reference sign 20. The sheets 20 of the stack-like arrangement 26 are stacked in parallel in the stacking direction 21 one on top of the other. When the calibration element 9 is positioned in the path of the x-ray beam 3 as illustrated in Figure 1, the stacking direction 21 is parallel to the center axis 5 of the x-ray beam.

Every sheet 20 is rectangular in shape. Each sheet 20 extends along a sheet plane and the stacking direction 21 is perpendicular to these planes. Each sheet 20 has the same thickness. The sheets 20 are flush to each other on every side of the stack-like arrangement 26. The stack-like arrangement 26 or stack can, for example, consist of the total of 35 sheets. Each sheet 20 preferably has the same dimensions in the three-dimensional space, for example, each sheet has a thickness of 0.6 mm and square dimensions with a length and a width of 135 mm x 135 mm. In another embodiment, the sheets 20 and thus the stack-like arrangement 26 can, for example, be circular when regarded along the stacking direction 21.

Figures 4 to 6 show further views of the calibration element 2.

In an embodiment, each aluminum sheet 20 is a rolled sheet.

Figure 7 depicts a micro-section of a grain texture 27 of a rolled aluminum sheet 20 according to an embodiment of the invention. The direction of rolling 30 of the sheet 20 is indicated by arrows 30. Figure 7 shows an area of the sheet 20 when the sheet 20 is regarded along the stacking direction 21.

The picture of the micro-section of Figure 7 has been created through polishing and anodizing the shown area with an etching agent according to Barker and using polarized light.

The grains in the grain texture 27 are oriented and elongated in a texture direction 29. That is, the existing orientation of the grains allows determining a given direction, namely the texture direction 29, in parallel to which the major axes of the majority of grains extend. For a better understanding, the texture direction 29 is illustrated in Figure 7 for some of the rolled grains 28 by bold arrows 29. As can be seen by the bold arrows 29, the grains 28 of the grain texture 27 are oriented in a texture direction 29 which is the direction of rolling 30 of the sheet 20.

The average grain size of the grains 28 in the grain texture 27 is smaller than 50 µm. The average grain size is determined by the known standard ASTM E112.

In the stack-like arrangement 26, the sheets 20 are stacked in such a manner that the direction of rolling 30 of each sheet 20 is perpendicular to the direction of rolling 21 of each directly adjacent sheet 20 when the sheets 20 and their directions of rolling are regarded along the stacking direction 21.

The degree of purity of aluminum of each sheet 20 in this exemplary embodiment is in the range from 98.1% per mass to 99.25% per mass. A suitable material for such sheets 20 is known as aluminum alloy AA 8079.

As an example, the components of AA 8079 are aluminum (Al) ≥ 98.1% per mass, copper (Cu) in the amount of ≤ 0.050% per mass, iron (Fe) in the amount of 0.7 to 1.3% per mass, silicon (Si) in the amount of 0.050 to 0.30% per mass, zinc (Zn) in the amount ≤ 0.10% per mass. The other components in the alloy have a total amount of ≤ 0.15% per mass, wherein each of these other components is ≤ 0.050% per mass and can be considered as residual.

In a further exemplary embodiment, the aluminum (Al) contains 0.7 to 1.3 % per mass iron (Fe) and 0.05 to 0.3% per mass silicon (Si). All other components can be considered as residual.

The grain sizes smaller than 50 µm referred to herein can be achieved by adding small amounts of grain fining components to the aluminum, such as titanium (Ti) or boron (B). However, TiC, BN, AIN, SiC, or ZrO₂ can also be used to achieve grain fining effects.

It is assumed that an average grain size smaller than 50 µm reduces unwanted diffraction of x-rays at the aluminum grains as is the case for larger grain sizes that normally occur in aluminum, in particular in purified aluminum. X-ray diffraction is assumed to have a negative influence on the homogeneity of the x-ray attenuation of an aluminum member.

In an exemplary calibration method according to the present invention the aluminum member 9 of the calibration element 2 is provided in the beam 3 between the x-ray tube 4 and the FPD 7 in a distance to the FPD 7 so that the pixels 8 of the FPD 7 only detect an attenuated intensity of the x-ray beam 3, as it is shown in Figure 1.

The signal output of pixels 8 of the FPD 7 is then calibrated on the basis of data derived from the attenuated x-ray beam detected by the pixels 8 in the manner as known by the skilled person and as outlined at the beginning of this description.

After the FPD 7 has been calibrated, the calibration element 2 is taken out of the x-ray beam 3 and the FPD 7 is then ready for the further use.

In a preferred embodiment, the calibration element 2 is used in the calibration of a flat panel x-ray detector of a lithotripter.

## Claims

1. A flat panel x-ray detector calibration element (2), the calibration element comprising an aluminum member (9) which has an average grain size smaller than 50 µm, **characterized in that** the aluminum member (9) comprises several sheets (20) in a stack-like arrangement (26),
wherein each sheet (20) in the stack-like arrangement (26) has a grain texture (27) with the grains (28) of this texture (27) being oriented in a texture direction, and the texture directions of at least two sheets (20) in the stack-like arrangement (26) are transverse to one another.

2. Calibration element according to claim 1, wherein
the average grain size is between 5 µm and 40 µm, particularly between 10 µm and 30 µm.

3. Calibration element according to claim 1 or 2, wherein the texture directions are perpendicular to one another.

4. Calibration element according to one of claims 1 to 3, wherein
the sheets (20) in the stack-like arrangement (26) are stacked one on top of the other in a stacking direction (21) and at least two sheets (20) have the same dimensions when regarded along the stacking direction (21).

5. Calibration element according to one of claims 1 to 4, wherein
all sheets (20) have the same dimensions in the three-dimensional space.

6. Calibration element according to one of claims 1 to 5, wherein
the calibration element (2) comprises a support structure(10),
the support structure (10) comprises a frame (11) and a grasping element (12) attached to the frame and laterally grasping the sheets (20), in particular the grasping element (12) clamps the sheets (20) together between the frame (11) and the grasping element (12).

7. Calibration element according to claim 6, wherein
the grasping element (12) is releasably attached to the frame (11).

8. Calibration element according to one of claims 1 to 7, wherein
the aluminum member (9) has a degree of purity of aluminum of more than 95% per mass, particularly of more than 98% per mass and more particularly of more than 99.9% per mass.

9. Calibration element according to one of claims 1 to 7, wherein
the aluminum member (9) has a degree of purity of aluminum from 95% per mass to 99.9% per mass, particularly from 98% per mass to 99.9% per mass, more particularly from 98.1% per mass to 99.9% per mass and most particularly from 98.1% per mass to 99.25% per mass.

10. Calibration element according to one of claims 1 to 7, wherein
the aluminum member (9) has a degree of purity of aluminum from 95% per mass to 99.25% per mass, particularly from 95% per mass to 98% per mass.

11. A method of calibrating a flat panel x-ray detector, the method comprising the steps of:
providing a calibration element (2) according to one of claims 1 to 10,
positioning the aluminum member (9) of the calibration element (2) in the path of an x-ray beam (3) which is directed on a flat panel x-ray detector (7), and
calibrating the signal output of pixels (8) of the flat panel x-ray detector (7) on the basis of data derived from the attenuated x-ray beam detected by the pixels (8).

12. Use of a calibration element (2) according to one of claims 1 to 10 for the calibration of the signal output of pixels (8) of a flat panel x-ray detector (7).

## Patentansprüche

1. Kalibrierelement (2) für einen flachen Röntgendetektor, wobei das Kalibrierelement umfasst ein Aluminiumelement (9), das eine durchschnittliche Korngröße kleiner als 50 µm aufweist,
**dadurch gekennzeichnete, dass**
das Aluminiumelement (9) mehrere Blätter (20) in einer stapelartigen Anordnung (26) umfasst,
wobei jedes Blatt (20) in der stapelartigen Anordnung (26) eine Korntextur (27) aufweist, wobei die Körner (28) dieser Textur (27) in einer Texturrichtung ausgerichtet sind, und die Texturrichtungen von mindestens zwei Blättern (20) in der stapelartigen Anordnung (26) quer zueinander sind.

2. Kalibrierelement nach Anspruch 1, wobei
die durchschnittliche Korngröße zwischen 5 µm und 40 µm, insbesondere zwischen 10 µm und 30 µm liegt.

3. Kalibrierelement nach Anspruch 1 oder 2, wobei die Texturrichtungen senkrecht zueinander stehen.

4. Kalibrierelement nach einem der Ansprüche 1 bis 3, wobei
die Blätter (20) in der stapelartigen Anordnung (26) in einer Stapelrichtung (21) übereinander gestapelt sind und mindestens zwei Blätter (20) die gleichen Abmessungen aufweisen, wenn sie entlang der Stapelrichtung (21) betrachtet werden.

5. Kalibrierelement nach einem der Ansprüche 1 bis 4, wobei
alle Blätter (20) die gleichen Abmessungen im dreidimensionalen Raum haben.

6. Kalibrierelement nach einem der Ansprüche 1 bis 5, wobei
das Kalibrierelement (2) eine Stützstruktur (10) umfasst,
die Stützstruktur (10) einen Rahmen (11) und ein am Rahmen befestigtes und die Blätter (20) seitlich greifendes Greifelement (12) umfasst, insbesondere klemmt das Greifelement (12) die Blätter (20) zwischen dem Rahmen (11) und dem Greifelement (12) zusammen.

7. Kalibrierelement nach Anspruch 6, wobei
das Greifelement (12) lösbar am Rahmen (11) befestigt ist.

8. Kalibrierelement nach einem der Ansprüche 1 bis 7, wobei
das Aluminiumelement (9) einen Reinheitsgrad von Aluminium von mehr als 95% pro Masse aufweist, insbesondere von mehr als 98% pro Masse und ganz besonders von mehr als 99,9% pro Masse.

9. Kalibrierelement nach einem der Ansprüche 1 bis 7, wobei
das Aluminiumelement (9) einen Reinheitsgrad von Aluminium von 95% pro Masse bis 99,9% pro Masse aufweist, insbesondere von 98% pro Masse bis 99,9% pro Masse, insbesondere von 98,1% pro Masse bis 99,9% pro Masse und insbesondere von 98,1% pro Masse bis 99,25% pro Masse.

10. Kalibrierelement nach einem der Ansprüche 1 bis 7, wobei
das Aluminiumelement (9) einen Reinheitsgrad von Aluminium von 95% pro Masse bis 99,25% pro Masse aufweist, insbesondere von 95% pro Masse bis 98% pro Masse.

11. Verfahren zum Kalibrieren eines flachen Röntgendetektor, wobei das Verfahren die folgenden Schritte umfasst:
Bereitstellen eines Kalibrierungselements (2) nach einem der Ansprüche 1 bis 10,
Positionieren des Aluminiumelements (9) des Kalibrierungselements (2) im Weg eines Röntgenstrahls (3), der auf einen flachen Röntgendetektor (7) gerichtet ist, und
Kalibrieren der Signalausgabe von Pixeln (8) des flachen Röntgendetektors (7) auf der Grundlage von Daten, die von dem von den Pixeln (8) erfassten abgeschwächten Röntgenstrahl abgeleitet sind.

12. Verwendung eines Kalibrierungselements (2) nach einem der Ansprüche 1 bis 10 zum Kalibrieren der Signalausgabe von Pixeln (8) eines flachen Röntgendetektors (7).

## Revendications

1. Élément d'étalonnage pour détecteur de rayons X à écran plat (2), l'élément d'étalonnage comprenant un élément en aluminium (9) qui présente une taille de grain moyenne inférieure à 50 µm,
**caractérisé en ce que**
l'élément en aluminium (9) comprend plusieurs feuilles (20) dans un agencement sous forme de pile (26),
dans lequel chaque feuille (20) dans l'agencement sous forme de pile (26) présente une texture de grain (27) avec les grains (28) de cette texture (27) orientés dans une direction de texture, et les directions de texture d'au moins deux feuilles (20) dans l'agencement sous forme de pile (26) sont transversales entre elles.

2. Élément d'étalonnage selon la revendication 1, dans lequel
la taille de grain moyenne est comprise entre 5 µm et 40 µm, en particulier entre 10 µm et 30 pm.

3. Élément d'étalonnage selon la revendication 1 ou 2, dans lequel les directions de texture sont perpendiculaires entre elles.

4. Élément d'étalonnage selon l'une des revendications 1 à 3, dans lequel
les feuilles (20) dans l'agencement sous forme de pile (26) sont empilées l'une sur l'autre dans une direction d'empilement (21) et au moins deux feuilles (20) ont les mêmes dimensions vu dans la direction d'empilement (21).

5. Élément d'étalonnage selon l'une des revendications 1 à 4, dans lequel
toutes les feuilles (20) ont les mêmes dimensions dans l'espace tridimensionnel.

6. Élément d'étalonnage selon l'une des revendications 1 à 5, dans lequel
l'élément d'étalonnage (2) comprend une structure de support (10),
la structure de support (10) comprend un cadre (11) et un élément de saisie (12) attaché au cadre et saisissant les feuilles (20) latéralement, et en particulier l'élément de saisie (12) serre les feuilles (20) ensemble entre le cadre (11) et l'élément de saisie (12).

7. Élément d'étalonnage selon la revendication 6, dans lequel
l'élément de saisie (12) est attaché de façon libérable au cadre (11).

8. Élément d'étalonnage selon l'une des revendications 1 à 7, dans lequel
l'élément en aluminium (9) présente un degré de pureté d'aluminium supérieur à 95 % en masse, en particulier supérieur à 98 % en masse, et plus particulièrement supérieur à 99.9 % en masse.

9. Élément d'étalonnage selon l'une des revendications 1 à 7, dans lequel
l'élément en aluminium (9) présente un degré de pureté d'aluminium compris entre 95 % en masse et 99,9 % en masse, en particulier de 98 % en masse à 99,9 % en masse, plus particulièrement entre 98,1 % en masse et 99,9 % en masse, et le plus particulièrement entre 98,1 % en masse et 99,25 % en masse.

10. Élément d'étalonnage selon l'une des revendications 1 à 7, dans lequel
l'élément en aluminium (9) présente un degré de pureté d'aluminium compris entre 95 % en masse et 99,25 % en masse, en particulier de 95 % en masse à 98 % en masse.

11. Procédé d'étalonnage pour détecteur de rayons X à écran plat, le procédé comprenant les étapes suivantes :
fourniture d'un élément d'étalonnage (2) selon l'une des revendications 1 à 10,
positionnement de l'élément en aluminium (9) de l'élément d'étalonnage (2) dans le chemin d'un faisceau de rayons X (3) qui est dirigé sur un détecteur de rayons X à écran plat (7), et
étalonnage de la sortie de signal de pixels (8) du détecteur de rayons X à écran plat (7) sur base de données dérivées du faisceau de rayons X atténué détecté par les pixels (8).

12. Utilisation d'un élément d'étalonnage (2) selon l'une des revendications 1 à 10 pour l'étalonnage de la sortie de signal de pixels (8) d'un détecteur de rayons X à écran plat (7).
